# EUROPÄISCHE PATENTSCHRIFT

(11) **EP 3 522 324 B1**
(45) Veröffentlichungstag und Bekanntmachung des Hinweises auf die Patenterteilung: **25.12.2019**
(21) Anmeldenummer: 18155109.4
(22) Anmeldetag: 05.02.2018
(51) Int. Cl.: H02J 3/14, H02J 3/32, H02J 3/38, H02J 13/00, H02H 3/02

(54) **VERFAHREN UND ANORDNUNG ZUM LASTMANAGEMENT VON ELEKTRISCHEN GERÄTEN**
METHOD AND ARRANGEMENT FOR LOAD MANAGEMENT OF ELECTRICAL DEVICES
PROCÉDÉ ET DISPOSITIF DE GESTION DE CHARGE DES APPAREILS ÉLECTRIQUES

(43) Veröffentlichungstag der Anmeldung: 07.08.2019
(73) Patentinhaber: Beegy GmbH, 68161 Mannheim (DE)
(72) Erfinder: Schneider, Johanna, 68167 Mannheim (DE); Arlt, Fabian, 67067 Ludwigshafen (DE)
(74) Vertreter: Glawe, Delfs, Moll

(56) Entgegenhaltungen:
- WO-A1-2014/202950
- WO-A1-2015/170411
- US-A1- 2010 060 079
- US-A1- 2014 046 495
- AZAR ARMIN GHASEM ET AL: "Aggregated load scheduling for residential multi-class appliances: Peak demand reduction", 2015 12TH INTERNATIONAL CONFERENCE ON THE EUROPEAN ENERGY MARKET (EEM), IEEE, 19. Mai 2015 (2015-05-19), Seiten 1-6, XP033207888, DOI: 10.1109/EEM.2015.7216702 [gefunden am 2015-08-20]

## Beschreibung

Die Erfindung betrifft ein Verfahren und eine Anordnung zum Lastmanagement von elektrischen Geräten.

Elektrische Verbrauchs-, Erzeugungs- und/oder Speicherkomponenten sind regelmäßig zu einem lokalen Gesamtsystem zusammengeschlossen, die über einen gemeinsamen Netzanschlusspunkt mit einem übergeordneten Netz verbunden sind. So können bspw. die elektrischen Geräte in einem Haushalt als lokales elektrisches Gesamtsystem angesehen werden, welche über den Hausanschluss mit einem öffentlichen Energieversorgungsnetz verbunden ist und über diesen Netzanschlusspunkt elektrische Leistung beziehen können. Zu dem elektrischen Gesamtsystem können auch elektrische Erzeuger, wie bspw. Fotovoltaikanlagen und Blockheizkraftwerke, oder Speicher, wie bspw. eine wiederaufladbare Batterie eines Elektrofahrzeuges oder eines stationären Batteriespeichers, gehören, sodass je nach lokalem Verbrauch und der lokalen Energieerzeugung bzw. Entladung eines Energiespeichers der Leistungsfluss auch vom lokalen Gesamtsystem in das übergeordnete Netz erfolgen kann.

In sämtlichen Fällen ist es erforderlich, dass der Leistungsfluss am Netzanschlusspunkt einen maximal zulässigen Wert nicht überschreitet.

Um dies zu verhindern sind im Stand der Technik Überstromschutzeinrichtungen bekannt, welche die Leitung und damit den Leistungsfluss im Bereich des Netzanschlusspunktes unterbrechen, wenn die sich aus dem tatsächlich vorliegenden Strom und der Sollspannung ergebene Leistung einen fest vorgegebenen Grenzwert überschreitet. Entsprechende Überstromschutzeinrichtungen, wie sie sich bspw. in einem Sicherungskasten finden, müssen nach einem Auslösen regelmäßig manuell wieder reaktiviert werden. Nachteilig an diesem Stand der Technik ist, dass bis zu einer solchen Reaktivierung das zugehörige elektrische Gesamtsystem vollständig zum übergeordneten Netz getrennt bleibt und ein manueller Eingriff erforderlich ist.

In einem elektrischen Gesamtsystem finden sich regelmäßig elektrische Verbraucher, deren momentane Leistungsaufnahme steuerbar ist. Gleiches gilt auch für Energiespeicher, bei denen zusätzlich auch noch eine evtl. Leistungseinspeisung gesteuert werden kann. Auch einige elektrische Erzeuger, wie bspw. Blockheizkraftwerke, lassen sich hinsichtlich ihrer Leistungseinspeisung steuern, während andere elektrische Erzeuger, wie bspw. Fotovoltaikanlagen, weniger steuerbar sind und ihre maximale Leistungseinspeisung vielmehr von externen Einflüssen, bspw. der effektiven Sonnenstrahlung, abhängt.

Vor diesem Hintergrund sind im Stand der Technik verschiedene Verfahren bekannt, die elektrischen Komponenten in einem lokalen Gesamtsystem so zu steuern, dass der Netzanschlusspunkt nicht überlastet und somit eine dort angeordnete elektrische Sicherung nicht ausgelöst wird.

So offenbart das Dokument DE 41 42 650 A1 eine Lastmanagement-Schaltung für Haushaltsgeräte, bei dem die Versorgungsleitung zu einem Haushaltsgerät zeitweise unterbrochen wird, wenn die Gesamtleistungsaufnahme aller an die Schaltung angeschlossenen Haushaltsgeräte einen vorgegebenen Grenzwert überschreitet.

In Dokument EP 2 685 269 B1 sind ein Verfahren und ein System zur Lastoptimierung eines elektrischen Systems offenbart, bei dem fortlaufend auf Basis eines tatsächlichen Angebots an elektrischer Leistung und einem festgestellten tatsächlichen Verbrauch ein Plan zur Zuteilung von elektrischer Energie zu einzelnen Verbraucher aktualisiert wird. Nachteilig an diesem Stand der Technik ist, dass das elektrische System lokal eine leistungsstarke Steuerung erfordert, die in der Lage ist, eine Vielzahl von in einer hohen Abtastrate gemessenen Einspeise- und Verbrauchswerten ausreichend schnell zu verarbeiten, dass eine zur Einhaltung von Grenzwerten geeignete Aktualisierung des genannten Plans zur Verfügung steht. Bei Überlastung der Steuerung oder sonstigen Unterbrechungen in der Aktualisierung des Plans können Grenzwerte überschritten werden, was ggf. zur Beschädigung von elektrischen Verbrauchern oder Erzeugern, zumindest aber regelmäßig zur Auslösung einer anschließend manuell zu reaktivierenden Sicherung am Netzanschlusspunkt führen kann.

Ein weiteres Beispiel von Verfahren und System zur Lastoptimierung wird in WO 2015/170411 A1 offenbart.

Aufgabe der vorliegenden Erfindung ist es, ein Verfahren und eine Anordnung zu schaffen, bei denen die aus dem Stand der Technik bekannten Nachteile nicht mehr oder zumindest nur noch im verminderten Umfang auftreten.

Gelöst wird diese Aufgabe durch ein Verfahren gemäß dem Hauptanspruch sowie eine Anordnung gemäß dem nebengeordneten Anspruch 7. Vorteilhafte Weiterbildungen sind Gegenstand der abhängigen Ansprüche.

Demnach betrifft die Erfindung ein Verfahren zur Regelung eines mit einem übergeordneten Netz über einen Netzanschlusspunkt verbundenen lokalen elektrischen Gesamtsystems zur Einhaltung eines vorgegebenen Leistungsgrenzwertes am Netzanschlusspunkt, wobei das lokale elektrische Gesamtsystem Komponenten, die wenigstens teilweise hinsichtlich ihres Beitrags zu der über den Netzanschlusspunkt übertragenen Leistung steuerbar sind, und eine lokale Steuerungseinheit umfasst, wobei die Steuerungseinheit zur lokalen Steuerung mit den steuerbaren Komponenten datenverbunden ist, die Leistungsverbindung wenigstens einer der Komponenten des lokalen elektrischen Gesamtsystem zum Netzanschlusspunkt schalten kann und mit einem übergeordneten Server zum Senden von Informationen und zum Empfang eines Fahrplans wenigstens zeitweise datenverbunden ist, mit den Schritten:
- Erzeugen eines in die Zukunft gerichteten, sich über einen Zeitraum erstreckenden Fahrplans zur Steuerung der Komponenten des lokalen elektrischen Gesamtsystems durch den übergeordneten Server, wobei der Fahrplan auf Basis der von der lokalen Steuerungseinheit empfangenen Messwerte, den Energieverbrauch oder die Energieerzeugung im lokalen elektrischen Gesamtsystem oder im übergeordneten Netz beeinflussenden Prognosedaten, historischen Energieverbrauch- oder Energieerzeugungsdaten und/oder technischen Informationen zu den Komponenten des lokalen elektrischen Gesamtsystems derart erzeugt wird, dass bei Eintritt der für die Erzeugung getroffenen Annahmen der vorgegebene Leistungsgrenzwert am Netzanschlusspunkt des lokalen elektrischen Gesamtsystems eingehalten wird;
- Übermitteln des erzeugten Fahrplans vom übergeordneten Server an die lokale Steuerungseinheit, sofern eine Datenverbindung besteht;
- Sofern bei der lokalen Steuerungseinheit ein aktueller Fahrplan vorhanden ist, Steuern der lokalen Komponenten gemäß dem Fahrplan durch die lokale Steuerungseinheit, und, sofern bei der lokalen Steuerungseinheit kein aktueller Fahrplan vorhanden ist, Steuern der lokalen Komponenten gemäß einem vorgegebenen und lokal abgespeicherten Standard-Fahrplan durch die lokale Steuerungseinheit;
- Überwachen der über den Netzanschlusspunkt übertragenen Leistung durch die Steuerungseinheit und bei Feststellung einer Überschreitung des vorgegebenen Leistungsgrenzwertes, Durchführen einer temporären Veränderung des der Steuerung zugrunde gelegten aktuellen oder Standard-Fahrplan nach einem vorgegebenen und in der Steuerungseinheit hinterlegten Schema; und
- Bei Feststellung, dass die temporäre Veränderung des aktuellen oder Standard-Fahrplans innerhalb einer vorgegebenen Zeit keine Unterschreitung des vorgegebenen Leistungsgrenzwertes zur Folge hat, Abschalten der Leistungsverbindung zu wenigstens einer Komponente nach vorgegebenem Schema.

Weiterhin betrifft die Erfindung eine Anordnung zum Lastmanagement von elektrischen Komponenten, einer lokalen Steuerungseinheit und einem übergeordneten Server, bei der die elektrischen Komponenten Teile eines lokalen elektrischen Gesamtsystems sind, welches über einen Netzanschlusspunkt mit einem übergeordneten Netz verbunden ist, und sich wenigstens teilweise hinsichtlich ihres Beitrags zu der über den Netzanschlusspunkt übertragenen Leistung steuerbar sind, die dem lokalen elektrischen Gesamtsystem zugeordnete lokale Steuerungseinheit zur Steuerung mit den Komponenten sowie wenigstens zeitweise mit dem übergeordneten Server zum Senden von Informationen und zum Empfang eines Fahrplans datenverbunden ist und wenigstens eine Leistungsverbindung zwischen einer Komponente zum Netzanschlusspunkt schaltbar ist, wobei am Netzanschlusspunkt eine Sensorvorrichtung zur Ermittlung der über den Netzanschlusspunkt fließenden Leistung vorgesehen ist, und wobei
- der übergeordnete Server dazu ausgebildet ist, einen in die Zukunft gerichteten, sich über einen Zeitraum erstreckenden Fahrplan zur Steuerung der Komponenten des lokalen elektrischen Gesamtsystems zu Erzeugen und an die lokale Steuerungseinheit zu übermitteln, wobei der Fahrplan auf Basis der von der lokalen Steuerungseinheit empfangenen Messwerte, den Energieverbrauch oder die Energieerzeugung im lokalen elektrischen Gesamtsystem oder im übergeordneten Netz beeinflussenden Prognosedaten, historischen Energieverbrauch- oder Energieerzeugungsdaten und/oder technischen Informationen zu den Komponenten des lokalen elektrischen Gesamtsystems derart erzeugt wird, dass bei Eintritt der für die Erzeugung getroffenen Annahmen ein vorgegebener Leistungsgrenzwert am Netzanschlusspunkt des lokalen elektrischen Gesamtsystems eingehalten wird;
- die lokale Steuerungseinheit dazu ausgebildet ist, die lokalen Komponenten nach einem aktuellen, von dem übergeordneten Server erhaltenen Fahrplan oder, falls kein aktueller Fahrplan vorliegt, nach einem Standard-Fahrplan zu steuern;
- die lokale Steuerungseinheit weiterhin dazu ausgebildet ist, die von der Sensorvorrichtung erfasste Leistung zu überwachen und bei Feststellung einer Überschreitung des vorgegebenen Leistungsgrenzwertes, einer temporären Veränderung des der Steuerung zugrunde gelegten aktuellen oder Standard-Fahrplan nach einem vorgegebenen und in der Steuerungseinheit hinterlegten Schema durchzuführen; und
- ein Überwachungsmodul vorgesehen und dazu ausgebildet ist, die von der Sensorvorrichtung erfasste Leistung zu überwachen und bei Feststellung, dass die temporäre Veränderung des aktuellen oder Standard-Fahrplans innerhalb einer vorgegebenen Zeit keine Unterschreitung des vorgegebenen Leistungsgrenzwertes zur Folge hat, die Leistungsverbindung zu wenigstens einer Komponente nach vorgegebenem Schema abzuschalten.

Zunächst werden einige in Zusammenhang mit der Erfindung verwendete Begriffe erläutert.

Bei dem "übergeordneten Netz" handelt es sich um ein Energieversorgungsnetz, aus dem das lokale elektrische Gesamtsystem elektrische Leistung beziehen und in welches ggf. auch elektrische Leistung eingespeist werden kann. Bei dem "übergeordneten Netz" kann es sich bspw. um ein öffentliches Stromnetz handeln.

Mit "Netzanschlusspunkt" ist derjenige Punkt des lokalen elektrischen Gesamtsystems bezeichnet, an dem elektrische Leistung mit dem übergeordneten Netz ausgetauscht werden kann. Ein lokales elektrisches Gesamtsystem weist in der Regel nur einen einzigen Netzanschlusspunkt auf, welcher häufig durch eine elektrische Sicherung gegen Überlast geschützt ist.

Die über den Netzanschlusspunkt übertragene elektrische Leistung kann messtechnisch ermittelt werden, indem sowohl Spannung als auch Stromstärke im Netzanschlusspunkt gemessen werden. Insbesondere wenn das übergeordnete Netz ausreichend zuverlässig auf einer vorgegebenen Soll-Spannung gehalten wird, kann es ausreichend sein, lediglich die tatsächliche Stromstärke im Netzanschlusspunkt zu erfassen und mit der vorgegebenen Soll-Spannung zur über den Netzanschlusspunkt übertragenen elektrischen Leistung zu verknüpfen.

Der "Leistungsgrenzwert am Netzanschlusspunkt" kann grundsätzlich gleich der über den Netzanschlusspunkt physikalisch zerstörungsfrei übertragbaren elektrischen Leistung gewählt werden. In der Regel wird der fraglichen Leistungsgrenze zum Zwecke einer Sicherheitsreserve jedoch unterhalb dieser Grenze gewählt werden. Selbstverständlich ist es auch möglich, den Leistungsgrenzwert auf bekannte Weise mit einem Toleranzbereich zu versehen. Umfasst das elektrische Gesamtsystem auch Energieerzeuger oder Energiespeicher, sodass grundsätzlich auch Leistung vom elektrischen Gesamtsystem in das übergeordnete eingespeist werden kann, wird der Leistungsfluss in eben diese Richtung ebenfalls über einen Leistungsgrenzwert am Netzanschlusspunkt überwacht. Der Leistungsgrenzwert kann dabei identisch zu dem Leistungsgrenzwert für die Leistungsentnahme aus dem Netz gewählt sein. Es ist jedoch auch möglich, einen anderen Leistungsgrenzwert für die Einspeisung von elektrischer Leistung in das Netz zu wählen, um bspw. die Stabilität des übergeordneten Netzes zu sichern. Der oder die Leistungsgrenzwerte können statisch sein. Es ist aber auch möglich, die Leistungsgrenzwerte in Abhängigkeit von vorgegebenen Parametern veränderlich auszugestalten. Weiterhin ist der fragliche Leistungsgrenzwert vorzugsweise sowohl bei der lokalen Steuerungseinheit als auch bei dem übergeordneten Server hinterlegt und wird bei evtl. Veränderung gegenseitig aktualisiert.

Eine "Datenverbindung" bezeichnet eine drahtgebundene oder drahtlose Verbindung zwischen zwei Elementen, über die Daten in der Regel bidirektionalen ausgetauscht werden können. "Leistungsverbindung" bezeichnet eine in der Regel drahtgebundene Verbindung zwischen zwei Elementen, über die elektrische Leistung übertragen werden kann. Daten- und Leistungsverbindungen können auch zusammenfallen (vgl. "Power-over-Ethernet" und "Power-line communication").

Der Begriff "Server" bezeichnet eine logische Einheit und ist insbesondere nicht auf eine einzelne physische Hardware-Einheit beschränkt. Vielmehr ist es möglich, dass der Server auch auf mehrere, ggf. örtlich getrennte physikalische Hardware-Einheiten aufgeteilt ist. Ein "übergeordneter Server" ist in der Regel nicht einer einzelnen lokalen Steuerungseinheit zugeordnet. Vielmehr können mehrere lokale Steuerungseinheit auf den übergeordneten Server zugreifen und mit diesem kommunizieren.

Ein "Fahrplan" im Sinne der Erfindung ist eine zeitliche Aufstellung der gewünschten Betriebszustände einer oder mehrerer elektrischer Komponenten über einen Zeitraum, die insbesondere Einfluss auf die Leistungsaufnahme oder Leistungseinspeisung der Komponenten und damit letztendlich auf ihren jeweiligen Beitrag zur über den Netzanschluss übertragenen Leistung haben. So kann für eine erste Komponente bspw. der zeitliche Verlauf der zulässigen Leistungsaufnahme festgelegt sein, während für eine andere Komponente festgelegt ist, dass sie nur in einem bestimmten Zeitraum auf einer bestimmten Betriebsstufe betrieben werden und in der übrigen Zeit ausgeschaltet sein soll. Der Fahrplan kann bspw. als Zeitreihe abgebildet werden, wobei für jede Komponente jeweils Zeitpunkte enthalten sind, an denen sich der Betriebszustand ändern soll. Die Zeitpunkte können als Wertepaare aus eindeutigem Zeitstempel und einem den ab diesem Zeitpunkt gewünschten Betriebszustand der jeweiligen Komponente spezifizierenden Parameter gebildet sein.

Als "aktueller Fahrplan" ist ein Fahrplan bezeichnet, der die gewünschten Betriebszustände einer oder mehrerer elektrischer Komponenten für den momentanen Zeitpunkt beinhaltet. Ein Fahrplan ist also dann ein "aktueller Fahrplan", wenn er für den momentanen Zeitpunkt - und bspw. nicht nur für die Vergangenheit - gültige Informationen für den gewünschten Betriebszustände einer oder mehrerer elektrischer Komponenten aufweist.

Mit "Koppeln" ist die Herstellung einer Datenverbindung zwischen zwei Einheiten bezeichnet, bei der zur Herstellung der Datenverbindung Nachrichten mit Informationen zu den Einheiten sowie der herzustellenden Datenverbindung ausgetauscht werden. Die Datenverbindung kann nach beliebigen Standards und mit beliebigen Protokollen aufgebaut werden.

Die Erfindung zeichnet sich dadurch aus, dass die ressourcenintensive Erstellung eines aktuellen Fahrplans für die Komponenten eines lokalen elektrischen Gesamtsystems nicht durch die dort vorgesehene lokale Steuerungseinheit, sondern vielmehr durch einen übergeordneten Server durchgeführt wird. Da die Erstellung eines Fahrplans für ein lokales elektrisches Gesamtsystem erfindungsgemäß zwar regelmäßig, aber dennoch nur zu diskreten Zeitpunkten erfolgen muss, kann durch Nutzung des übergeordneten Servers für mehrere lokale elektrische Gesamtsysteme eine günstige Ressourcenausnutzung erreicht werden. Insbesondere müssen bei der Erfindung aber die lokalen Steuerungseinheiten nicht so ressourcenstark sein, dass sie selbstständig einen Fahrplan erstellen können.

Erfindungsgemäß ist vorgesehen, dass der übergeordnete Server einen in die Zukunft gerichteten, sich über einen Zeitraum erstreckenden Fahrplan auf Basis von Annahmen erzeugt. In diese Erzeugung können unterschiedlichste Faktoren einfließen, welche die Leistungsaufnahme der einzelnen Komponenten des elektrischen Gesamtsystems über den Zeitraum, für den der Fahrplan erzeugt wird, abschätzen lassen.

So können aus den von der lokalen Steuerungseinheit übermittelten Messdaten die praktisch aktuellen Verbrauchs- und Erzeugungswerte sowie Ladezustände von Energiespeichern ermittelt werden und unmittelbar in die Erzeugung einfließen.

Durch geeignete Speicherung und Auswertung dieser Messdaten lassen sich auch historische Energieverbrauchs- und Erzeugungsdaten ableiten, die Auskunft über ein Nutzungsverhalten der Komponenten des elektrischen Gesamtsystems geben können. So kann in einem Beispiel aus historischen Energieverbrauchswerten abgelesen werden, dass ein Nutzer regelmäßig Freitag abends seine elektrische Sauna betreibt, was bei der Erstellung des Fahrplans entsprechend berücksichtigt werden kann. In einem anderen Beispiel ist eine Ladestation für ein elektrisches Fahrzeug Teil des lokalen elektrischen Gesamtsystem, wobei aus historischen Energieverbrauchsdaten abgelesen werden kann, dass Wochentags regelmäßig nur eine geringe Wiederaufladung über die Nacht erforderlich ist, während der Energiespeicher des elektrischen Fahrzeugs am Wochenende abends regelmäßig leer ist. Der am Wochenende somit höhere Energiebedarf zur Wiederaufladung des elektrischen Fahrzeugs kann ebenfalls im Fahrplan berücksichtigt werden.

In die Erzeugung des Fahrplans können auch andere, den Energieverbrauch oder die Energieerzeugung im lokalen elektrischen Gesamtsystem oder im übergeordneten Netz beeinflussenden Prognosedaten einfließen. Beispielsweise kann eine Wetterprognose für die geografische Lage des lokalen elektrischen Gesamtsystems Hinweise auf die durch eine Fotovoltaikanlage als Teil des Gesamtsystems zu erwartende Leistungserzeugung geben. Auch kann die Vorhersage von kalten Wetter mit dichten Wolken Hinweise auf einen erhöhten Energiebedarf geben, wenn das elektrische Gesamtsystem zur Heizung oder zur Beleuchtung vorgesehene Komponenten umfasst. Weiterhin kann die im übergeordneten Netz grundsätzlich verfügbare Energie, die sich bspw. über den momentanen Strompreis ablesen lässt, berücksichtigt werden. Komponenten, die viel elektrische Leistung verbrauchen, können so bspw. bevorzugt zu Zeiten niedriger Strompreise betrieben werden.

Schlussendlich können noch technische Informationen zu den Komponenten des lokalen elektrischen Gesamtsystems in die Erzeugung des Fahrplans einfließen. Diese technischen Informationen können Angaben zur maximalen Leistungserzeugung, Leistungsaufnahme und/oder Speicherkapazität einer Komponente des lokalen elektrischen Gesamtsystems ebenso umfassen, wie Angaben, zu welchem Grad die jeweilige Komponente steuerbar ist, ob bspw. nur ein An- oder Ausschalten möglich oder aber verschiedene Betriebsstufen bei einer Komponente möglich sind. Auch können Mindestanforderungen für den Betrieb einer Komponente Teil dieser Informationen sein. So kann bspw. festgelegt sein, dass die Temperatur eines Gefrierschranks, der als Messwert an den übergeordneten Server übermittelt wird, einen vorgegebenen Grenzwert nicht überschreiten darf oder dass die Energiezufuhr zu einer Komponente zu einer bestimmten Tageszeit oder in einem bestimmten Betriebszustand nicht unterbrochen werden darf. Teil der Informationen zu den Komponenten kann auch eine Angabe sein, ob es sich bei der Komponente um eine eher im Hintergrund arbeitende oder aber eine direkt mit einem Nutzer interagierende Komponente, wie bspw. einem Fernseher, handelt. Bei Letzterem ist ein zeitweises Ausschalten ggf. störender als bspw. bei einem Kühlschrank, sofern dieser die gewünschte Temperatur grundsätzlich hält.

Auf Basis wenigstens eines Teils der genannten Faktoren kann der übergeordnete Server eine Prognose zum Leistungsbedarf und ggf. zur Leistungserzeugung erstellen und daraus einen Fahrplan ableiten. Der Fahrplan wird dabei so erstellt, dass bei Einhaltung des Fahrplans und bei Eintritt der für die Erzeugung desselben getroffenen Annahmen zu keinem Zeitpunkt der vorgegebene Leistungsgrenzwert am Netzanschlusspunkt des lokalen elektrischen Gesamtsystems überschritten wird. In anderen Worten wird die Steuerung der Komponenten eines elektrischen Gesamtsystems durch den übergeordneten Server so geplant, dass bei dem erwarteten Verlauf der Dinge keine Überschreitung des Grenzwertes am Netzanschlusspunkt des elektrischen Gesamtsystems zu erwarten ist.

Der so erstellte Fahrplan wird an die Steuerungseinheit desjenigen lokalen elektrischen Gesamtnetzes übermittelt, für welches er erstellt wurde. Sollte eine für die Übertragung erforderliche Datenverbindung zeitweise nicht bestehen, wird die Übermittlung des Fahrplans solange versucht, bis dieser aufgrund eines neuen, für das fragliche lokale elektrische Gesamtnetz erstellte Fahrplan obsolet wird oder der Zeitraum, für den der Fahrplan vorgesehen war, abgelaufen ist.

Die lokale Steuerungseinheit empfängt den von dem übergeordneten Server erstellten Fahrplan und legt ihn der Steuerung der Komponenten des lokalen elektrischen Gesamtsystems als aktuellen Fahrplan zugrunde. Liegt bei der Steuerungseinheit kein aktueller Fahrplan vor - bspw. weil die Übertragung zwischen übergeordnetem Server und der Steuerungseinheit unterbrochen ist - wird zur Steuerung der Komponenten ein in der Steuerungseinheit selbst hinterlegter Standard-Fahrplan herangezogen. Dadurch ist ein Weiterbetrieb des elektrischen Gesamtsystems auch bei Störungen des übergeordneten Servers oder der Datenverbindung zwischen Server und lokaler Steuerungseinheit gewährleistet.

Die Steuerungseinheit überwacht weiterhin die über den Netzanschlusspunkt tatsächlich übertragene Leistung und gleicht diese mit dem vorgegebenen Leistungsgrenzwert ab. Wird eine Überschreitung des Grenzwertes - bspw. aufgrund eines stochastischen, nicht vorhersehbaren Ereignisses - festgestellt, wird derjenige Fahrplan, welcher der Steuerung der Komponenten momentan zugrunde gelegt wird, nach einem vorgegebenen und in der Steuerungseinheit hinterlegten Schema angepasst, bis im besten Fall der Grenzwert wieder eingehalten wird. Das Schema umfasst Instruktionen in welcher Reihenfolge, in welcher Art und/oder in welchem Umfang die Leistungsaufnahme oder Leistungseinspeisung der einzelnen Komponenten des lokalen elektrischen Gesamtsystems zeitweise verändert werden soll, um den Leistungsfluss durch den Netzanschlusspunkt zu reduzieren. Bspw. kann ein Gefrierschrank häufig zeitweise abgeschaltet werden, sofern die Temperatur im Innern einen vorgegebenen Grenzwert nicht überschreitet, und/oder die Heizleistung einer Geschirrspülmaschine zeitweise reduziert werden kann. Die Anpassung eines vorgegebenen Fahrplans durch ein ebenfalls vorgegebenes Schema ist wenig ressourcenintensiv, sodass selbst eine zum Erzeugen von Fahrplänen zu ressourcenschwache lokale Steuerungseinheit die Anpassung ohne Weiteres durchführen kann. Das Schema wird vorzugsweise durch den übergeordneten Server erstellt, an die lokale Steuerungseinheit übermittelt und dort hinterlegt.

Neben der beschriebenen Leistungsüberwachung und daraus ggf. resultierender Anpassung des Fahrplans, wird die über den Netzanschlusspunkt übertragene Leistung überwacht und bei Feststellung, dass der vorgegebene Leistungsgrenzwert über eine vorgegebene Zeit dauerhaft überschritten wird, was auf eine unzureichende oder nicht zeitig genug erfolgte Anpassung des Fahrplans hindeuten kann, wird nach einem vorgegebenen Schema die Leistungsverbindung zu wenigstens einer Komponente des lokalen elektrischen Gesamtnetzes unterbrochen. Durch diese Maßnahme ist eine zusätzliche Sicherung gegen eine unzulässige Überschreitung des Leistungsgrenzwertes für den Netzanschlusspunkt gegeben. Sollte die beschriebene Anpassung des Fahrplans bspw. aufgrund einer Störung der lokalen Steuerungseinheit nicht oder nicht schnell genug erfolgen, wird wenigstens eine elektrische Komponenten durch Abschalten der Leistungsverbindung von dem lokalen elektrischen Gesamtsystem getrennt, womit jegliche Leistungsaufnahme oder -Einspeisung dieser Komponente vollständig unterbunden wird. Die Abschaltung der Leistungsverbindungen erfolgt erneut nach einem Schema, in dem bspw. die Wichtigkeit der einzelnen Komponenten hinterlegt ist. Die Leistungsverbindungen werden dann in Abhängigkeit der Wichtigkeit der darüber an das Gesamtsystem angebundenen Komponenten abgeschaltet.

Um zu verhindern, dass die beschriebene Überprüfung, ob eine temporäre Veränderung des aktuellen oder Standard-Fahrplans innerhalb einer vorgegebenen Zeit keine Unterschreitung des vorgegebenen Leistungsgrenzwertes zur Folge hat, und das daraus ggf. resultierende Abschalten der Leistungsverbindung zu wenigstens einer Komponente nach vorgegebenem Schema durch eine Fehlfunktion oder übermäßige Auslastung bei der temporären Veränderung des der Steuerung zugrunde gelegten aktuellen oder Standard-Fahrplan beeinträchtigt wird, ist bevorzugt, wenn die genannte Überprüfung und evtl. Abschaltung durch ein von der zur Veränderung des Fahrplans vorgesehenen Einheit gesondertes Überwachungsmodul durchgeführt wird. Das gesonderte Überwachungsmodul kann dabei getrennt von oder als Teil der Steuerungseinheit ausgeführt werden, ist im letztgenannten Teil aber zumindest logisch ausreichend vom übrigen Teil der Steuerungseinheit getrennt, dass die beschriebene negative Beeinflussung dieses Überwachungsmoduls ausgeschlossen ist. Das Schema wird vorzugsweise durch den übergeordneten Server erstellt, über die die lokale Steuerungseinheit an das betreffende Überwachungsmodul übermittelt und dort hinterlegt. Alternativ ist es möglich, das Überwachungsmodul als rein analoge Schaltung auszugestalten, wobei das genannte Schema dann durch die Verdrahtung der Schaltung festgelegt ist.

Es ist weiter bevorzugt, wenn nach einer Kopplung einer Komponente des elektrischen Gesamtsystems mit der lokalen Steuerungseinheit die lokale Steuerungseinheit die von der Komponente empfangenen Daten unverändert an den übergeordneten Server übermittelt und der Server dazu ausgebildet ist, in den Daten ggf. enthaltene Identifikationsmerkmale der Komponente auszulesen und/oder durch Beobachtung von in den Daten enthaltenen Verbrauchs- oder Einspeisungswerte über einen Zeitraum technische Informationen über die Komponente abzuleiten. Bei der Kopplung einer Komponente mit der Steuerungseinheit werden die zum Aufbau der Datenverbindung von der Komponente an die Steuerungseinheit übermittelten Nachrichten an den übergeordneten Server weitergeleitet, der die darin enthaltenen Informationen mit einer Datenbank abgleichen kann, um bereits anhand dieser Informationen, wenn möglich, den Typ und/oder die technischen Eigenschaften der Komponente vollständig zu ermitteln. Ist dies nicht möglich - bspw., weil keine entsprechenden Informationen in den genannte Nachrichten enthalten sind oder die Komponente unbekannt ist -, ist vorgesehen, dass über einen Zeitraum gewonnene Messdaten, die u. a. auch die Leistungsaufnahme oder -Einspeisung der fraglichen Komponente mit abbilden, durch den übergeordneten Server ausgewertet werden, um so Rückschlüsse auf die Art und ggf. auch einzelne technische Informationen der Komponente ziehen zu können. So kann bspw. aus den Messdaten abgelesen werden, wenn eine Komponente Leistung sowohl aufnehmen als auch abgeben kann, womit es sich wohl um einen Energiespeicher handelt. Über die üblichen Lade- und Entladezyklen kann weiterhin auf die Kapazität des Energiespeichers geschlossen werden. Auch diese rechenintensive Auswertung von Messdaten wird durch den übergeordneten Server durchgeführt, weshalb die lokale Steuerungseinheit weiterhin nicht besonders ressourcenstark sein muss. Selbstverständlich ist auch möglich, dass die Informationen betreffend eine Komponente manuell eingegeben, korrigiert und/oder ergänzt werden.

Es ist bevorzugt, wenn die lokale Steuerungseinheit und/oder der übergeordnete Server komponentenspezifische Steuerbefehle und/oder Mess- bzw. Statusmitteilungen in Echtzeit in ein einheitliches Datenformat wandeln. Dadurch können zum einen mit einer Vielzahl von unterschiedlichen Komponenten mit jeweils unterschiedlichen Ansteuerungs-, Informations- und/oder Übertragungsprotokollen in ein elektrisches Gesamtsystem eingebunden werden, zum anderen wird die Verarbeitung der Daten sowohl seitens des übergeordneten Servers als auch der lokalen Steuerungseinheit aufgrund der Vereinheitlichung vereinfacht.

Fällt eine Datenverbindung zwischen einer Komponente des elektrischen Gesamtsystems und der lokalen Steuerungseinheit dauerhaft aus, ist bevorzugt, wenn das Schema zur Durchführen einer temporären Veränderung derart angepasst wird, dass die nicht erreichbare Komponente darin nicht mehr berücksichtigt wird. In anderen Worten soll die nicht mehr erreichbare Komponente bei einer erforderlichen Anpassung des Fahrplans unmittelbar nicht mehr berücksichtigt werden, um durch Übergehen dieser Komponente eine im Ergebnis schnellere Einhaltung des Leistungsgrenzwertes erreichen zu können.

Das Erzeugen des Fahrplans durch den übergeordneten Server kann in regelmäßigen Zeitabständen erfolgen, wobei die Zeitabstände vorzugsweise kleiner gleich dem durch einen Fahrplan abgedeckten Zeitraum sind. Dadurch wird sichergestellt, dass zumindest bei Bestehen einer Datenverbindung zwischen übergeordnetem Server und lokaler Steuerungseinheit Letztere immer mit einem aktuellen und gültigen Fahrplan ausgestattet werden kann. Alternativ oder zusätzlich kann das Erzeugen des Fahrplans durch den übergeordneten Server durch externe Ereignisse ausgelöst werden. Bei diesen externen Ereignissen kann es sich bspw. Benutzereingaben über ein im Internet zugängliches Interface handeln, es können neue oder veränderte Verbrauchs- und/oder Erzeugungsdaten von der lokalen Steuerungseinheit übermittelt werden, die eine Neuerstellung des Fahrplans vorteilhaft erscheinen lassen und/oder es liegen neue oder veränderte Prognosedaten vor, womit sich die Annahmen verändern. In allen Fällen ist durch ein aufgrund eines externen Ereignisses ausgelöstes Erzeugen des Fahrplans sichergestellt, dass die aufgrund des externen Ereignisses zu erwartenden Veränderungen in dem von der Steuerungseinheit verwendeten aktiven Fahrplan bestmöglich berücksichtigt werden.

Zur Erläuterung der erfindungsgemäßen Anordnung wird auf die vorstehenden Ausführungen verwiesen.

Die Erfindung wird nun anhand einer bevorzugten Ausführungsform unter Bezugnahme auf die beigefügten Zeichnungen beispielhaft beschrieben. Es zeigen:
- Figur 1:: ein erstes Ausführungsbeispiel einer erfindungsgemäßen Anordnung zur Durchführung des erfindungsgemäßen Verfahrens; und
- Figur 2:: eine schematische Darstellung des auf der Anordnung gemäß Figur 1 durchgeführten erfindungsgemäßen Verfahrens.

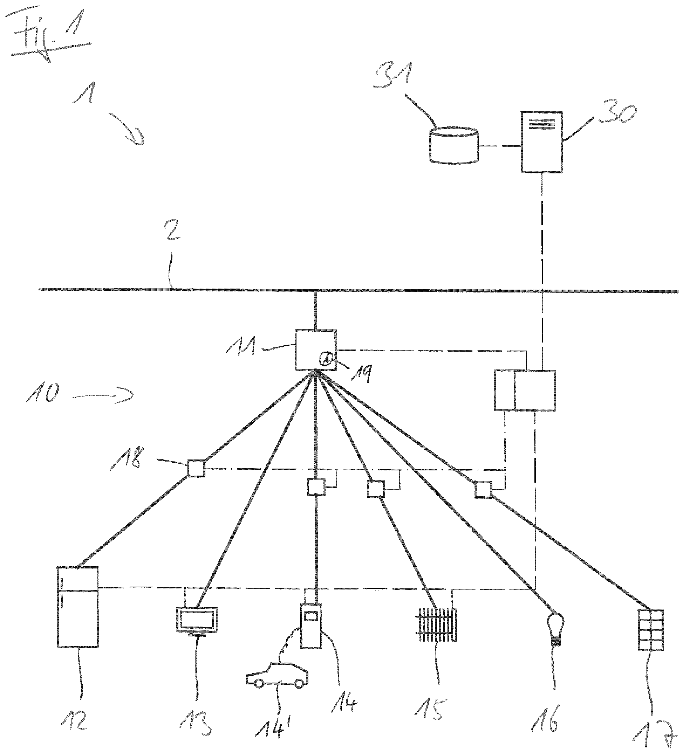

In Figur 1 ist ein erstes Ausführungsbeispiel einer erfindungsgemäßen Anordnung 1 dargestellt, mit der das erfindungsgemäße Verfahren ausführbar ist.

Die Anordnung 1 umfasst ein lokales elektrisches Gesamtsystem 10, welches über einen Netzanschlusspunkt 11 mit einem öffentlichen Stromnetz als übergeordnetes Netz 2 verbunden ist. Das lokale elektrische Gesamtsystem 10 umfasst elektrische Komponenten 12-17 sowie eine lokale Steuerungseinheit 20. In dem dargestellten Ausführungsbeispiel handelt es sich bei den elektrischen Komponenten 12-16 zunächst um für einen Haushalt typische elektrische Verbraucher, nämlich einen Kühlschrank 12, einen Fernseher 13, eine elektrische Heizung 15 sowie ein durch ein Leuchtmittel angedeutetes Beleuchtungssystem 16. Darüber hinaus ist noch eine Ladestation 14 für elektrische Fahrzeuge 14' vorgesehen, über welche die Batterie des Fahrzeugs 14' geladen werden kann. Über die Ladestation 14 lässt sich die Ladegeschwindigkeit bzw. der Ladestrom steuern. Darüber hinaus sind Ladestation 14 und Fahrzeug 14' auch dazu ausgebildet, einen Teil der in der Batterie eines an der Ladestation 14 angeschlossenen Fahrzeugs 14' gespeicherten Leistung zum unmittelbaren Verbrauch im Gesamtsystem oder zur Einspeisung in das übergeordnete Netz 2 zu entladen. Für ein entsprechendes Entladen sind in der Ladestation 14 und/oder dem Fahrzeug 14' Regeln hinterlegt, ob und bis zu welchem Grad die Batterie des Fahrzeugs 14' entladen werden darf, wobei diese Vorgaben auch zeitabhängig sein können.

Bei den Komponenten 12-15 handelt es sich um sog. intelligente Geräte, d. h. sie weisen eine Möglichkeit für eine Datenverbindung auf, über die zumindest Steuerungsbefehle empfangen, in der Regel aber auch Statusmitteilungen o. ä. gesendet werden können. Das Beleuchtungssystem 16 ist hingegen konventionell mit mechanischen Schaltern und analogen Leuchtmitteln (nicht dargestellt) ausgeführt ist.

Ebenfalls Teil des lokalen elektrischen Gesamtsystems 10 ist eine Fotovoltaikanlage 17, die mit dem Netzanschlusspunkt 11 leistungsverbunden ist, wobei die von der Fotovoltaikanlage 17 erzeugte Energie entweder unmittelbar von den anderen elektrischen Komponenten 11-16 des Gesamtsystems 10 verbraucht, oder aber in das übergeordnete Netz 2 eingespeist werden kann. Auch wenn die Fotovoltaikanlage 17 der Steuerungseinheit 20 ggf. Messwerte betreffend die Erzeugung von elektrischer Leistung bereitstellen kann, ist die Fotovoltaikanlage 17 im dargestellten Ausführungsbeispiel jedenfalls hinsichtlich der Leistungserzeugung nicht steuerbar.

Die jeweiligen Leistungsverbindungen zwischen den Komponenten 12, 14, 15 und 17 sowie dem Netzanschlusspunkt 11 weisen jeweils ein steuerbares Schaltschütz 18, mit dem die Leistungsverbindung wahlweise unterbrochen werden kann auf.

Im Netzanschlusspunkt 11 ist neben einer evtl. vorgesehenen elektrischen Sicherung (nicht dargestellt) ein Sensor 19 zur Erfassung der am Netzanschlusspunkt 11 vorliegenden Stromstärke vorgesehen.

Die lokale Steuerungseinheit 20 ist mit dem Netzanschlusspunkt 11 datenverbunden und kann aus den von dem Sensor 19 zur Verfügung gestellten Messdaten zusammen mit der Nennspannung des Netzes 2 die momentan über den Netzanschlusspunkt 11 strömende Leistung ermitteln.

Ebenfalls ist die Steuerungseinheit 20 mit denjenigen Komponenten 12-15 des lokalen elektrischen Gesamtsystems 10 datenverbunden, die steuerbar sind. Die Steuerbarkeit bezieht sich in diesem Zusammenhang insbesondere auf die Möglichkeit, durch Steuerungsbefehle die momentane Leistungsaufnahme der Komponenten 12-15 oder auch die Leistungseinspeisung von in der Batterie des Fahrzeugs 14' gespeicherten Energie über die Ladestation 14 zu beeinflussen.

Teil der Steuerungseinheit 20 ist ein Überwachungsmodul 21, welches mit den Schaltschützen 18 verbunden ist und diese steuern kann.

Die lokale Steuerungseinheit 20 ist weiterhin mit einem übergeordneten Server 30 - bspw. über das Internet - datenverbunden. Der Server 30 hat Zugriff auf eine Datenbank 31, in der technische Spezifikationen von einer Vielzahl von elektrischen Geräten sowie historische, von dem lokalen elektrischen Gesamtsystem 10 erhaltene Daten und Informationen abgelegt sind.

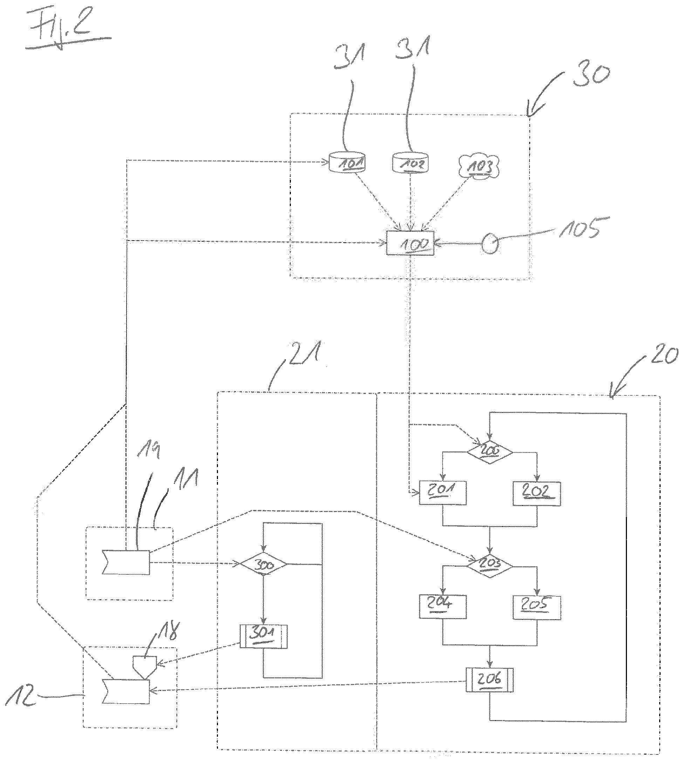

Die Funktionsweise der Anordnung aus Figur 1 und damit das erfindungsgemäße Verfahren werden nun anhand der Figur 2 erläutert.

Die von dem Sensor 19 am Netzanschlusspunkt 11 aufgenommenen Messwerte werden zunächst ebenso wie sämtlich von den mit der Steuerungseinheit 20 datenverbundenen Komponente 12-15 (von denen in Figur 2 exemplarisch nur Komponente 12 gezeigt ist) zur Verfügung gestellten Daten an den übergeordneten Server 30 übermittelt. Die Kommunikation erfolgt dabei über die lokale Steuerungseinheit (vgl. Figur 1), die auf der einen Seite über unterschiedliche Datenprotokolle und Übertragungsstandards mit den Komponenten 12-15 und dem Sensor 19, auf der anderen Seite über das Internet mit dem übergeordneten Server 30 kommunizieren kann. Die Steuerungseinheit 20 ist dabei so ausgestaltet, dass sie bei bestehender Datenverbindung sämtliche empfangene Daten unverändert und vorzugsweise in Echtzeit an den übergeordneten Server 30 übermittelt.

Der übergeordnete Server 30 kann die empfangenen und regelmäßig in einem komponentenspezifischen Datenformat vorliegenden Daten in ein einheitliches Datenformat wandelt, bevor diese abgelegt bzw. weiterverarbeitet werden.

Die so empfangenen und ggf. konvertierten Daten werden zum einen in der Datenbank 31 abgelegt und dort mit anderen Daten 30 zu historischen Energieverbrauch- oder Energieerzeugungsdaten 101 weiterverarbeitet, aus denen sich regelmäßig Trends zum Energieverbrauch, bspw. tageszeit- oder wochentags-abhängig, ablesen lassen, fließen zum anderen aber auch unmittelbar in die Erzeugung 100 eines Fahrplans für das lokale elektrische Gesamtsystem 10 ein. Für die Erzeugung 100 wird weiterhin noch auf die in der Datenbank 31 abgelegten technischen Informationen 102 zu den Komponenten 12-17 des lokalen elektrischen Gesamtsystems 10 sowie auf eine Wetterprognose 103 für den Standort des lokalen elektrischen Gesamtsystems 10 zurückgegriffen. Auch können evtl. Regeln zum zeitweise und teilweise Entladen der Batterie eines mit der Ladesäule 14 verbundenen Fahrzeugs 14' berücksichtigt werden, die zu diesem Zweck an den übergeordneten Server 30 übermittelt und dort in der Datenbank 31 abgelegt werden. Auch können beliebige andere, die Leistungserzeugung oder den Leistungsverbrauch in dem Gesamtnetz 10 beeinflussende Informationen sowie ggf. vom Nutzer vorgegebene Präferenzen bei der Erzeugung 100 des Fahrplans berücksichtigt werden.

Für die Erzeugung 100 des Fahrplans werden sämtlich Informationen 101-103 sowie die aktuellen Messwerte des Sensors 19 genutzt, um einen in die Zukunft gerichteten, sich über einen gewissen Zeitraum - in diesem Fall 7,5 Minuten - erstreckenden Plan zur Steuerung der Komponenten 12-15 des lokalen elektrischen Gesamtsystems 10 erstellt, mit der Zielsetzung, dass bei Eintritt der für die Erzeugung getroffenen Annahmen ein vorgegebener Leistungsgrenzwert am Netzanschlusspunkt 11 des lokalen elektrischen Gesamtsystems 10 eingehalten wird. Der Fahrplan enthält dazu Zeitreihen für durch Steuerungsbefehle seitens der lokalen Steuerungseinheit 20 hinsichtlich ihres Leistungsverbrauchs beeinflussbare Komponenten 12-15.

Die Erzeugung 100 des Fahrplans wird durch einen Trigger 105 ausgelöst, der eine regelmäßige Erzeugung 100 alle 5 Minuten und darüber hinaus noch eine Erzeugung 100 anstößt, wenn sich die übermittelten Messwerte des Sensors 19 oder die Wetterprognose 103 maßgeblich, d. h. über ein vorgegebenes Toleranzmaß hinaus, verändern.

Der so erzeugte Fahrplan wird dann an die lokale Steuerungseinheit 20 übermittelt, sofern eine geeignete Datenverbindung besteht.

Die lokale Steuerungseinheit 20 prüft in einem ersten Schritt 200, ob ein aktueller, d. h. den momentanen Zeitpunkt abdeckender, von dem übergeordneten Server 30 erstellter Fahrplan vorliegt. Ist dies der Fall, wird eben dieser aktuelle Fahrplan für die Steuerung herangezogen (Schritt 201). Liegt kein aktueller Fahrplan vor - bspw. weil aufgrund einer Fehlfunktion der Server 30 keinen Fahrplan erstellen oder zumindest nicht an die Steuerungseinheit 20 übermitteln konnte - wird auf einen dauerhaft in der Steuerungseinheit 20 hinterlegten Standard-Fahrplan zurückgegriffen (Schritt 202).

Anschließend wird überprüft, ob die am Netzanschlusspunkt 11 über den Sensor 19 ermittelte aktuelle Leistung unterhalb des vorgegebenen Leistungsgrenzwertes liegt (Schritt 203). Ist dies der Fall, bleibt der ermittelte aktuelle oder Standard-Fahrplan unverändert (Schritte 204). Falls nicht, wird der Fahrplan gemäß einem vorgegebenen Schema verändert (Schritte 205). In dem Schema ist bspw. hinterlegt, dass das Kühlaggregat des Kühlschranks 12 bei einer Innentemperatur über einem vorgegebenen Grenzwert für eine gewisse Zeitspanne ausgeschaltet werden kann, oder - sofern dies nicht möglich oder nicht ausreichend ist - die Energieaufnahme der Heizung um einen vorgegebenen Prozentsatz reduziert wird. Auch kann in dem Schema hinterlegt sein, wann ein Ladevorgang der Ladestation 14 ggf. unterbrochen werden kann, damit die dafür erforderliche Leistung erst zu einem späteren Zeitpunkt zur Verfügung gestellt werden muss, oder ob kurzfristig fehlende Leistung durch ein zeit- und teilweises Entladen der Batterie des mit der Ladestation 14 verbundenen Fahrzeugs 14' zur Verfügung gestellt werden kann. Nur wenn sämtliche vorgenannten Merkmale nicht ausreichen sollten, um den vorgegebenen Leistungsgrenzwert am Netzanschlusspunkt 11 einzuhalten, darf der Fernseher 13 ausgeschaltet werden. Über das hinterlegte Schema kann, sofern erforderlich, der aktuelle oder Standard-Fahrplan so angepasst werden, dass der Leistungsgrenzwert grundsätzlich eingehalten werden sollte. Eine entsprechende Anpassung des Zeitplans kann bspw. dann erforderlich sein, wenn der Benutzer zu einem nicht vorhergesehenen Zeitpunkt die Beleuchtung 16 einschaltet.

Der ggf. wie beschrieben veränderte aktuelle oder Standard-Zeitplan wird zur Steuerung der Komponenten 12-15 verwendet. Dazu wandelt die Steuerungseinheit 20 die im Zeitplan enthaltenen Informationen in für die einzelnen Komponenten 12-15 geeigneten Steuerungsbefehle um und übermittelt diese anschließend an die Komponenten 12-15 (Schritt 206).

Der beschriebene, von der Steuerungseinheit 20 durchgeführte Verfahrensablauf wird in Dauerschleife wiederholt, wodurch im Normalfall sichergestellt wird, dass die tatsächliche Leistung am Netzanschlusspunkt 11 dauerhaft unter dem vorgegebenen Leistungsgrenzwert liegt.

Dennoch ist zusätzlich das Überwachungsmodul 21 vorgesehen, welches ständig mit den von dem Sensor 19 am Netzanschlusspunkt 11 erfassten Messwerten versorgt wird. Das Überwachungsmodul 21 überprüft, ob bei einer Überschreitung des vorgegebenen Leistungsgrenzwertes die tatsächliche Leistung innerhalb einer vorgegebenen Zeitspanne auf einen Wert unterhalb des Leistungsgrenzwertes reduziert wird (Schritt 300). Ist dies der Fall, war das oben beschriebene Verfahren der Steuerungseinheit 20 erfolgreich. Fall nicht, werden nach einem vorgegebenen Schema die Schaltschütze 18 ausgelöst und somit die Leistungsverbindung für einzelne Komponenten 12, 14, 15, 17 unterbrochen. In dem Schema ist dabei die Reihenfolge, in der die Schaltschütze 18 ausgelöst werden, festgelegt. So kann z. B. zunächst die Leistungsverbindung der Heizung 15 unterbrochen werden und, erst wenn dies nicht ausreicht, den Leistungsgrenzwert einzuhalten, die Leistungsverbindung des Kühlschranks 12 unterbrochen werden, usw.

Das Überwachungsmodul 21 kann dadurch sicherstellen, dass selbst bei einer Fehlfunktion der Steuerungseinheit 20 im Hinblick auf das oben beschriebene Verfahren, der vorgegebene Leistungsgrenzwert am Netzanschlusspunkt 11 eingehalten wird.

Die Steuerungseinheit 20 und das Überwachungsmodul 21 überwachen selbstverständlich nicht nur die Einhaltung eines vorgegebenen Leistungsgrenzwertes bei einem Leistungsfluss vom übergeordneten Netz 2 in das elektrische Gesamtsystem 10, sondern auch bei einem Leistungsfluss vom Gesamtsystem 10 - insbesondere der Fotovoltaikanlage 17 - in das übergeordnete Netz 2, für die jedoch ein anderer, geringerer Leistungsgrenzwert gilt. Zur Einhaltung des Grenzwertes kann die Steuerungseinheit 20 die leistungsverbrauchenden Komponenten 12-16 des Gesamtsystems 10 versuchen so zu betreiben, dass die von der Fotovoltaikanlage 11 erzeugte Leistung abzüglich der durch die Komponenten 12-16 verbrauchten Leistung den vorgegebenen Leistungsgrenzwert nicht überschreitet. Gelingt dies nicht oder nicht schnell genug, trennt das Überwachungsmodul 21 die Fotovoltaikanlage 17 über das Schaltschütz 18 ab, sodass der Leistungsfluss in das übergeordnete Netz 2 unterbunden wird, gleichzeitig die übrigen Komponenten 12-16 aber noch mit elektrischer Leistung an dem übergeordneten Netz 2 versorgt werden können.

## Patentansprüche

1. Verfahren zur Regelung eines mit einem übergeordneten Netz (2) über einen Netzanschlusspunkt (11) verbundenen lokalen elektrischen Gesamtsystem (20) zur Einhaltung eines vorgegebenen Leistungsgrenzwertes am Netzanschlusspunkt (11), wobei das lokale elektrische Gesamtsystem (10) Komponenten (12-17), die wenigstens teilweise hinsichtlich ihres Beitrags zu der über den Netzanschlusspunkt (11) übertragenen Leistung steuerbar sind, und eine lokale Steuerungseinheit (20) umfasst, wobei die Steuerungseinheit (20) zur lokalen Steuerung mit den steuerbaren Komponenten (12-15) datenverbunden ist, die Leistungsverbindung wenigstens einer der Komponenten (12-17) des lokalen elektrischen Gesamtsystems (10) zum Netzanschlusspunkt (11) schalten kann, und mit einem übergeordneten Server (30) zum Senden von Informationen und zum Empfang eines Fahrplans wenigstens zeitweise datenverbunden ist, mit den Schritten:
- Erzeugen eines in die Zukunft gerichteten, sich über einen Zeitraum erstreckenden Fahrplans zur Steuerung der Komponenten (12-15) des lokalen elektrischen Gesamtsystems (10) durch den übergeordneten Server (30), wobei der Fahrplan auf Basis der von der lokalen Steuerungseinheit empfangenen Messwerte, den Energieverbrauch oder die Energieerzeugung im lokalen elektrischen Gesamtsystem (10) oder im übergeordneten Netz (2) beeinflussenden Prognosedaten, historischen Energieverbrauch- oder Energieerzeugungsdaten und/oder technischen Informationen zu den Komponenten (12-17) des lokalen elektrischen Gesamtsystems (10) derart erzeugt wird, dass bei Eintritt der für die Erzeugung getroffenen Annahmen der vorgegebene Leistungsgrenzwert am Netzanschlusspunkt (11) des lokalen elektrischen Gesamtsystems (10) eingehalten wird;
- Übermitteln des erzeugten Fahrplans vom übergeordneten Server (30) an die lokale Steuerungseinheit (20), sofern eine Datenverbindung besteht;
- Sofern bei der lokalen Steuerungseinheit (20) ein aktueller Fahrplan vorhanden ist, Steuern der lokalen Komponenten (12-15) gemäß dem Fahrplan durch die lokale Steuerungseinheit (20), und, sofern bei der lokalen Steuerungseinheit (20) kein aktueller Fahrplan vorhanden ist, Steuern der lokalen Komponenten (12-15) gemäß einem vorgegebenen und lokal abgespeicherten Standard-Fahrplan durch die lokale Steuerungseinheit (20);
- Überwachen der über den Netzanschlusspunkt (11) übertragenen Leistung durch die Steuerungseinheit (20) und bei Feststellung einer Überschreitung des vorgegebenen Leistungsgrenzwertes, Durchführen einer temporären Veränderung des der Steuerung zugrunde gelegten aktuellen oder Standard-Fahrplan nach einem vorgegebenen und in der Steuerungseinheit (20) hinterlegten Schema; und
- Bei Feststellung, dass die temporäre Veränderung des aktuellen oder Standard-Fahrplans innerhalb einer vorgegebenen Zeit keine Unterschreitung des vorgegebenen Leistungsgrenzwertes zur Folge hat, Abschalten der Leistungsverbindung zu wenigstens einer Komponente (12-17) nach vorgegebenem Schema.

2. Verfahren nach Anspruch 1,
**dadurch gekennzeichnet, dass**
die Feststellung, ob eine temporäre Veränderung des aktuellen oder Standard-Fahrplans innerhalb einer vorgegebenen Zeit keine Unterschreitung des vorgegebenen Leistungsgrenzwertes zur Folge hat, durch ein von der den aktuellen oder Standard-Fahrplans temporär verändernden Einheit gesondertes Überwachungsmodul (21) durchgeführt wird.

3. Verfahren nach einem der vorhergehenden Ansprüche,
**dadurch gekennzeichnet, dass**
nach einer Kopplung einer Komponente (12-17) des elektrischen Gesamtsystems (10) mit der lokalen Steuerungseinheit (20) die lokale Steuerungseinheit (20) die von der Komponente (12-17) empfangenen Daten unverändert an den übergeordneten Server (30) übermittelt und der Server (30) dazu ausgebildet ist, in den Daten enthaltene Identifikationsmerkmale der Komponente (12-17) auszulesen und/oder durch Beobachtung von in den Daten enthaltenen Verbrauchs- oder Einspeisungswerte über einen Zeitraum technische Informationen über die Komponente (12-17) abzuleiten.

4. Verfahren nach einem der vorhergehenden Ansprüche,
**dadurch gekennzeichnet, dass**
die lokale Steuerungseinheit (20) und/oder der übergeordnete Server (30) komponentenspezifische Steuerbefehle und/oder Mess- bzw. Statusmitteilungen in Echtzeit in ein einheitliches Datenformat wandeln.

5. Verfahren nach einem der vorhergehenden Ansprüche,
**dadurch gekennzeichnet, dass**
bei dauerhaften Ausfall der Datenverbindung zwischen einer Komponente (12-17) des elektrischen Gesamtsystems (10) und der lokalen Steuerungseinheit das (20) Schema zur Durchführen einer temporären Veränderung derart angepasst wird, dass die nicht erreichbare Komponente (12-17) nicht mehr berücksichtigt wird.

6. Verfahren nach einem der vorhergehenden Ansprüche,
**dadurch gekennzeichnet, dass**
das Erzeugen des Fahrplans durch den übergeordneten Server (30) in regelmäßigen Zeitabständen, die vorzugsweise kleiner gleich dem durch einen Fahrplan abgedeckten Zeitraum sind, durchgeführt wird und/oder durch externe Ereignisse ausgelöst sind, wobei dieses externe Ereignisse vorzugsweise Benutzereingaben, der Empfang neuer oder veränderter Verbrauchs- und/oder Erzeugungsdaten, und/oder neue oder veränderte Prognosedaten sind.

7. Anordnung (1) zum Lastmanagement von elektrischen Komponenten (12-17), einer lokalen Steuerungseinheit (20) und einem übergeordneten Server (30), bei der die elektrischen Komponenten (12-17) Teile eines lokalen elektrischen Gesamtsystems (10) sind, welches über einen Netzanschlusspunkt (11) mit einem übergeordneten Netz (2) verbunden ist, und sich wenigstens teilweise hinsichtlich ihres Beitrags zu der über den Netzanschlusspunkt übertragenen Leistung steuerbar sind, die dem lokalen elektrischen Gesamtsystem (10) zugeordnete lokale Steuerungseinheit (20) zur Steuerung mit den steuerbaren Komponenten (12-15) sowie wenigstens zeitweise mit dem übergeordneten Server (30) zum Senden von Informationen und zum Empfang eines Fahrplans datenverbunden ist und wenigstens eine Leistungsverbindung zwischen einer Komponente (12-17) zum Netzanschlusspunkt (11) schaltbar ist, wobei am Netzanschlusspunkt (11) eine Sensorvorrichtung (19) zur Ermittlung der über den Netzanschlusspunkt (11) fließenden Leistung vorgesehen ist, und wobei
- der übergeordnete Server (30) dazu ausgebildet ist, einen in die Zukunft gerichteten, sich über einen Zeitraum erstreckenden Fahrplans zur Steuerung der Komponenten (12-15) des lokalen elektrischen Gesamtsystems (10) zu erzeugen und an die lokale Steuerungseinheit (20) zu übermitteln, wobei der Fahrplan auf Basis der von der lokalen Steuerungseinheit (20) empfangenen Messwerte, den Energieverbrauch oder die Energieerzeugung im lokalen elektrischen Gesamtsystem (10) oder im übergeordneten Netz (2) beeinflussenden Prognosedaten, historischen Energieverbrauch- oder Energieerzeugungsdaten und/oder technischen Informationen zu den Komponenten (12-17) des lokalen elektrischen Gesamtsystems (10) derart erzeugt wird, dass bei Eintritt der für die Erzeugung getroffenen Annahmen ein vorgegebener Leistungsgrenzwert am Netzanschlusspunkt (11) des lokalen elektrischen Gesamtsystems (10) eingehalten wird;
- die lokale Steuerungseinheit (20) dazu ausgebildet ist, die lokalen Komponenten (12-15) nach einem aktuellen, von dem übergeordneten Server (30) erhaltenen Fahrplan oder, falls kein aktueller Fahrplan vorliegt, nach einem Standard-Fahrplan zu steuern;
- die lokale Steuerungseinheit (20) weiterhin dazu ausgebildet ist, die von der Sensorvorrichtung (19) erfasste Leistung zu überwachen und bei Feststellung einer Überschreitung des vorgegebenen Leistungsgrenzwertes, einer temporären Veränderung des der Steuerung zugrunde gelegten aktuellen oder Standard-Fahrplan nach einem vorgegebenen und in der Steuerungseinheit hinterlegten Schema durchzuführen; und
- ein Überwachungsmodul (21) vorgesehen und dazu ausgebildet ist, die von der Sensorvorrichtung (19) erfasste Leistung zu überwachen und bei Feststellung, dass die temporäre Veränderung des aktuellen oder Standard-Fahrplans innerhalb einer vorgegebenen Zeit keine Unterschreitung des vorgegebenen Leistungsgrenzwertes zur Folge hat, die Leistungsverbindung zu wenigstens einer Komponente (12-17) nach vorgegebenem Schema abzuschalten.

8. Anordnung nach Anspruch 7,
**dadurch gekennzeichnet, dass**
das Überwachungsmodul (21) in die lokale Steuerungseinheit (20) integriert ist.

9. Anordnung nach Anspruch 7 oder 8,
**dadurch gekennzeichnet, dass**
die Anordnung (1) zur Durchführung eines Verfahrens gemäß einem der Ansprüche 3 bis 6 ausgebildet ist.

## Claims

1. A method for controlling an overall electrical system (20) connected to a superordinate grid (2) via a grid connection point (11) to adhere to a specified power limit at the grid connection point (11), wherein the local overall electrical system (10) comprises components (12-17) which are at least partly controllable in terms of their contribution to the power transmitted over the grid connection point (11), and a local control unit (20), wherein to provide local control the control unit (20) has a data connection to the controllable components (12-15), can connect the power connection of at least one of the components (12-17) of the local overall electrical system (10) to the grid connection point (11), and has at least a temporary data connection to a superordinate server (30) for sending information and receiving a schedule data, having the steps of:
- creating a forward-looking schedule extending over a period for controlling the components (12-15) of the local overall electrical system (10) by means of the superordinate server (30), wherein the schedule is created on the basis of the measured values received from the local control unit, forecast data concerning the energy consumption or energy production in the local overall electrical system (10) or in the superordinate grid (2), historical energy consumption or energy production data and/or technical information relating to the components (12-17) of the local overall electrical system (10), in such a way that upon the occurrence of the assumptions made for creating the schedule, the specified power limit value is adhered to at the grid connection point (11) of the local overall electrical system (10);
- transferring the created schedule from the superordinate server (30) to the local control unit (20) if a data connection exists;
- if a current schedule is available on the local control unit (20), controlling the local components (12-15) in accordance with the schedule using the local control unit (20), and, if no current schedule is available on the local control unit (20), controlling the local components (12-15) in accordance with a specified and locally stored standard schedule using the local control unit (20);
- monitoring the power transmitted via the grid connection point (11) using the control unit (20) and upon determining that the specified power limit has been exceeded, implementing a temporary modification to the current or standard schedule on which the control is based according to a pre-defined scheme stored in the control unit (20); and
- upon determining that the temporary modification in the current or standard schedule does not cause the specified power limit to be undershot within a specified time limit, switching off the power connection to at least one component (12-17) according to the predefined scheme.

2. The method as claimed in claim 1,
**characterized in that**
the determination as to whether a temporary change in the current or standard schedule does not cause the specified power limit to be undershot within a specified time limit is performed by a monitoring module (21) separate from the unit that temporarily modifies the current or standard schedule.

3. The method as claimed in any one of the preceding claims,
**characterized in that**
after a coupling of a component (12-17) of the overall electrical system (10) to the local control unit (20), the local control unit (20) transmits the data received by the component (12-17) unchanged to the superordinate server (30) and the server (30) is designed to read out identification features of the component (12-17) contained in the data and/or, by observation of consumption or infeed figures contained in the data, to derive technical information about the component (12-17) over a period of time.

4. The method as claimed in any one of the preceding claims,
**characterized in that**
the local control unit (20) and/or the superordinate server (30) convert component-specific control commands and/or measurement or status messages into a uniform data format in real-time.

5. The method as claimed in any one of the preceding claims,
**characterized in that**
in the event of permanent failure of the data connection between a component (12-17) of the overall electric system (10) and the local control unit (20), the scheme for implementing a temporary modification is adjusted in such a way that the non-accessible component (12-17) is no longer taken into account.

6. The method as claimed in any one of the preceding claims,
**characterized in that**
the creation of the schedule by the superordinate server (30) is carried out at regular intervals, which are preferably less than or equal to the period covered by a schedule and/or are triggered by external events, these external events preferably being user inputs, the reception of new or modified consumption and/or production data, and/or new or modified forecast data.

7. An assembly (1) for the load management of electrical components (12-17), a local control unit (20) and a superordinate server (30), in which the electrical components (12-17) are parts of a local overall electrical system (10) which is connected via a grid connection point (11) to a superordinate grid (2) and which are at least partly controllable in terms of their contribution to the power transmitted via the grid connection point, the local control unit (20) for providing the control associated with the overall electrical system (10) has a data connection to the controllable components (12-15) and at least a temporary data connection to the superordinate server (30) to send information and to receive a schedule, and at least one power connection can be activated between a component (12-17) and the grid connection point (11), wherein at the grid connection point (11) a sensor device (19) is provided for determining the power flowing through the grid connection point (11), and wherein
- the superordinate server (30) is designed for creating a forward-looking schedule extending over a period of time for controlling the components (12-15) of the local overall electrical system (10) and for transferring said schedule to the local control unit (20), wherein the schedule is created on the basis of the measured values received from the local control unit (20), forecast data concerning the energy consumption or energy production in the local overall electrical system (10) or in the superordinate grid (2), historical energy consumption or energy production data and/or technical information relating to the components (12-17) of the local overall electrical system (10), in such a way that upon the occurrence of the assumptions made for creating the schedule, a specified power limit value is adhered to at the grid connection point (11) of the local overall electrical system (10);
- the local control unit (20) is designed to control the local components (12-15) according to a current schedule received from the superordinate server (30) or, if no current schedule exists, according to a standard schedule;
- the local control unit (20) is also designed to monitor the power recorded by the sensor device (19) and upon determining that the specified power limit has been exceeded, to implement a temporary modification to the current or standard schedule on which the control is based according to a pre-defined scheme stored in the control unit; and
- a monitoring module (21) is provided and designed to monitor the power recorded by the sensor device (19) and upon determining that the temporary modification of the current or standard schedule does not cause the specified power limit to be undershot within a specified time, to switch off the power connection to at least one component (12-17) according to a predefined scheme.

8. The assembly as claimed in claim 7,
**characterized in that**
the monitoring module (21) is integrated into the local control unit (20).

9. The assembly as claimed in claim 7 or 8,
**characterized in that**
the assembly (1) is designed to carry out a method as claimed in one of claims 3 to 6.

## Revendications

1. Procédé pour le réglage d'un système électrique global local (20) relié à un réseau prioritaire (2) par le biais d'un point de raccordement au réseau (11), visant le respect d'une valeur seuil de puissance prédéfinie au niveau du point de raccordement au réseau (11), dans lequel le système électrique global local (10) comporte des composants (12-17) aptes à être commandés au moins partiellement quant à leur contribution à la puissance transmise par le biais du point de raccordement au réseau (11), ainsi qu'une unité de commande locale (20), dans lequel l'unité de commande (20) est reliée par données aux composants commandables (12-15) pour la commande locale et capable de commuter la liaison de puissance de l'un au moins des composants (12-17) du système électrique global local (10) avec le point de raccordement au réseau (11), tout en étant au moins par moments reliée par données à un serveur prioritaire (30) pour l'envoi d'informations et la réception d'une feuille de route, avec les étapes suivantes :
- génération d'une feuille de route prospective s'étendant sur une période pour la commande des composants (12-15) du système électrique global local (10) par le serveur prioritaire (30), la feuille de route étant générée sur la base des valeurs de mesure reçues par l'unité de commande locale, d'estimations influençant la consommation ou la production d'énergie dans le système électrique global local (10) ou dans le réseau prioritaire (2), de données historiques de consommation d'énergie ou de production d'énergie et/ou d'informations techniques concernant les composants (12-17) du système électrique global local (10), de telle façon que lors de l'entrée des hypothèses adoptées pour la génération, la valeur seuil de puissance prédéfinie est respectée au niveau du point de raccordement au réseau (11) du système électrique global local (10) ;
- transmission de la feuille de route générée, du serveur prioritaire (30) à l'unité de commande locale (20), à condition qu'il existe une liaison de données ;
- dans la mesure où une feuille de route actuelle est disponible au niveau de l'unité de commande locale (20), commande des composants locaux (12-15) conformément à la feuille de route par l'unité de commande locale (20), et, lorsqu'aucune feuille de route actuelle n'est disponible au niveau de l'unité de commande locale (20), commande des composants locaux (12-15) par l'unité de commande locale (20) conformément à une feuille de route standard prédéfinie et enregistrée localement ;
- surveillance de la puissance transmise par le biais du point de raccordement au réseau (11) par l'unité de commande (20) et, en cas de détermination d'un passage de la valeur seuil de puissance prédéfinie, mise en place d'une modification temporaire de la feuille de route standard ou actuelle retenue pour la commande, selon un schéma prédéfini et enregistré dans l'unité de commande (20) ; et
- s'il est déterminé que la modification temporaire de la feuille de route standard ou actuelle n'a entraîné aucun passage en dessous de la valeur seuil de puissance prédéfinie dans un intervalle de temps prédéfini, coupure de la liaison de puissance avec au moins un composant (12-17) selon un schéma prédéfini.

2. Procédé selon la revendication 1,
**caractérisé en ce que**
la détermination d'une absence de passage en dessous de la valeur seuil de puissance prédéfinie dans un intervalle de temps prédéfini suite à une modification temporaire de la feuille de route standard ou actuelle est effectuée par un module de surveillance (21) distinct de l'unité modifiant temporairement la feuille de route standard ou actuelle.

3. Procédé selon l'une des revendications précédentes,
**caractérisé en ce que**
suite à un accouplement d'un composant (12-17) du système électrique global (10) avec l'unité de commande locale (20), l'unité de commande locale (20) transmet les données reçues par le composant (12-17) sans modification au serveur prioritaire (30) et le serveur (30) est conçu pour lire des éléments d'identification du composant (12-17) contenus dans les données et/ou pour déduire des informations techniques concernant le composant (12-17) sur une période par observation de valeurs de consommation ou d'alimentation contenues dans les données.

4. Procédé selon l'une des revendications précédentes,
**caractérisé en ce que**
l'unité de commande locale (20) et/ou le serveur prioritaire (30) convertit des ordres de commande spécifiques au composant et/ou des informations de mesure ou de statut en temps réel en un format de données homogène.

5. Procédé selon l'une des revendications précédentes,
**caractérisé en ce que**
en cas de défaillance durable de la liaison de données entre un composant (12-17) du système électrique global (10) et l'unité de commande locale (20), le schéma pour la mise en place d'une modification temporaire est adapté de manière à ce que le composant (12-17) non joignable ne soit plus pris en compte.

6. Procédé selon l'une des revendications précédentes,
**caractérisé en ce que**
la génération de la feuille de route par le serveur prioritaire (30) est effectuée selon des intervalles de temps réguliers, de préférence inférieurs ou égaux au laps de temps couvert par une feuille de route, et/ou est déclenchée par des évènements extérieurs, ces évènements extérieurs étant de préférence des entrées d'utilisateur, la réception de données de consommation et/ou de production nouvelles ou modifiées, et/ou des estimations nouvelles ou modifiées.

7. Dispositif (1) pour la gestion de charges de composants électriques (12-17), d'une unité de commande locale (20) et d'un serveur prioritaire (30), dans lequel les composants électriques (12-17) font partie d'un système électrique global local (10) raccordé à un réseau prioritaire (2) par le biais d'un point de raccordement au réseau (11) et peuvent être commandés au moins partiellement quant à leur contribution à la puissance transmise par le biais du point de raccordement au réseau, l'unité de commande locale (20) attribuée au système électrique global local (10) est reliée par données aux composants commandables (12-15) pour la commande ainsi qu'au moins par moments au serveur prioritaire (30) pour l'envoi d'informations et la réception d'une feuille de route, et au moins une liaison de puissance entre un composant (12-17) et le point de raccordement au réseau (11) peut être commutée, dans lequel un dispositif de détection (19) destiné à déterminer la puissance passant par le point de raccordement au réseau (11) est prévu au niveau du point de raccordement au réseau (11), et dans lequel
- le serveur prioritaire (30) est conçu pour générer une feuille de route prospective s'étendant sur une période pour la commande des composants (12-15) du système électrique global local (10) et pour transmettre celle-ci à l'unité de commande locale (20), la feuille de route étant générée sur la base des valeurs de mesure reçues par l'unité de commande locale (20), d'estimations influençant la consommation ou la production d'énergie dans le système électrique global local (10) ou dans le réseau prioritaire (2), de données historiques de consommation d'énergie ou de production d'énergie et/ou d'informations techniques concernant les composants (12-17) du système électrique global local (10), de telle façon que lors de l'entrée des hypothèses adoptées pour la génération, la valeur seuil de puissance prédéfinie est respectée au niveau du point de raccordement au réseau (11) du système électrique global local (10) ;
- l'unité de commande locale (20) est conçue pour commander les composants locaux (12-15) selon une feuille de route actuelle, obtenue par le serveur prioritaire (30), ou alors, en l'absence de feuille de route actuelle, selon une feuille de route standard ;
- l'unité de commande locale (20) est en outre conçue pour surveiller la puissance détectée par le dispositif de détection (19) et, en cas de détermination d'un dépassement de la valeur seuil de puissance prédéfinie, pour effectuer une modification temporaire de la feuille de route actuelle ou standard retenue pour la commande, selon un schéma prédéfini et enregistré dans l'unité de commande ; et
- il est prévu un module de surveillance (21) conçu pour surveiller la puissance détectée par le dispositif de détection (19) et, s'il est déterminé que la modification temporaire de la feuille de route standard ou actuelle n'a pas entraîné de passage en dessous de la valeur seuil de puissance prédéfinie dans un intervalle de temps prédéfini, pour couper la liaison de puissance avec au moins un composant (12-17) selon un schéma prédéfini.

8. Dispositif selon la revendication 7,
**caractérisé en ce que**
le module de surveillance (21) est intégré dans l'unité de commande locale (20).

9. Dispositif selon la revendication 7 ou 8,
**caractérisé en ce que**
le dispositif (1) est conçu pour exécuter un procédé selon l'une des revendications 3 à 6.
